# EUROPÄISCHE PATENTSCHRIFT

(11) **EP 1 493 926 B1**
(45) Veröffentlichungstag und Bekanntmachung des Hinweises auf die Patenterteilung: **22.11.2006**
(21) Anmeldenummer: 04014672.2
(22) Anmeldetag: 23.06.2004
(51) Int. Cl.: F04C 2/10, F04C 15/00

(54) **Verfahren zur Herstellung einer Innenzahnradpumpe**
Method for manufacturing an internal gear pump
Procédé de fabrication d'une pompe à engrenage interne

(30) Priorität: 30.06.2003 DE 10329271
(43) Veröffentlichungstag der Anmeldung: 05.01.2005
(73) Patentinhaber: Bosch Rexroth AG, 70184 Stuttgart (DE)
(72) Erfinder: Bergmann, Erhard, Dr., 19079 Mirow (DE); Voss, Gerhard, 19370 Parchim (DE); Schildmann, Manfred, 19370 Parchim (DE)
(74) Vertreter: Jaap, Reinhard

(56) Entgegenhaltungen:
- PATENT ABSTRACTS OF JAPAN Bd. 011, Nr. 048 (M-561), 13. Februar 1987 (1987-02-13) & JP 61 210283 A (YAMADA SEISAKUSHO:KK), 18. September 1986 (1986-09-18)
- PATENT ABSTRACTS OF JAPAN Bd. 1997, Nr. 10, 31. Oktober 1997 (1997-10-31) & JP 09 151861 A (MITSUBISHI MOTORS CORP), 10. Juni 1997 (1997-06-10)

## Beschreibung

Die Erfindung bezieht sich auf ein Verfahren zur Herstellung einer Verdrängereinheit nach dem Oberbegriff des Anspruchs 1.
Derartige Verdrängereinheiten werden in hydraulischen Lenkeinrichtungen zur Dosierung eines Lenkölstromes und in Hydraulikmotoren zur Erzeugung eines Antriebsmomentes für die unterschiedlichsten Anwendungsfälle eingesetzt, und sind z.B. aus JP 61-210283 bekannt.

Nach dem Gerotorprinzip arbeitende Verdrängereinheiten sind allgemein bekannt. Sie bestehen aus einem feststehenden Außenring mit einer Innenverzahnung und einem im Inneren des Außenringes angeordneten und mit dem Außenring kämmenden Läuferzahnrad mit einer Außenverzahnung. Dabei besitzt die Innenverzahnung des Außenringes einen Zahn mehr als die Außenverzahnung des Läuferzahnrades, sodass das Läuferzahnrad eine Drehbewegung um die eigene Achse und eine Pendelbewegung um die Achse des Außenringes vollziehen kann, wobei beide Bewegungen überlagert sind. Durch die unterschiedlichen Zähnezahlen des feststehenden Außenringes und des umlaufenden Läuferzahnrades bilden sich volumenveränderliche Kammern, die sich mit der Bewegung des Läuferzahnrades vergrößern oder verkleinern und so wechselweise zu Saug- oder Druckkammern werden.

Die Verwendung einer solchen Verdrängereinheit in einer vollhydraulischen Lenkeinrichtung ist beispielsweise in der DD 99 758 beschrieben. Dabei ist die Verdrängereinheit stirnseitig an einem Gehäuse angeflanscht, in dem sich eine Drehschiebersteuereinheit befindet. Die Drehschiebersteuereinheit besteht aus einer mit Spiel im Gehäuse eingepassten Steuerhülse und einem in der Steuerhülse laufenden Steuerkolben, die beide gegen die Kraft einer Feder relativ und begrenzt zueinander drehbar sind. Der innenliegende Steuerkolben ist drehfest mit einem Handrad und die außenliegende Steuerhülse ist drehfest über eine Antriebswelle mit dem Läuferzahnrad der Verdrängereinheit verbunden. Die Steuerhülse besitzt im Zusammenspiel mit dem Gehäuse radiale und axiale Kanäle, die eine hydraulische Verbindung einerseits zwischen einem im Gehäuse befindlichen Einlassanschluss und den Saugkammern der Verdrängereinheit und andererseits zwischen den Druckkammern der Verdrängereinheit und einem ebenfalls im Gehäuse befindlichen Auslassanschluss herstellen. Dabei ist der Einlassanschluss mit einer Versorgungspumpe und der Auslassanschluss mit einem Lenkzylinder verbunden. In einer Neutralstellung sind alle Kanäle des Drehschiebersteuerventils geschlossen und der anliegende Versorgungsstrom wird ungenutzt zum Tank zurückgeführt. Bei Auslenkung des Drehschiebersteuerventils öffnen die Kanäle und der von der Versorgungspumpe bereitgestellte Ölstrom wird je nach der Größe der Auslenkung in einen von der Verdrängereinheit dosierten Lenkölstrom und einen Kurzschlussstrom aufgeteilt.
Bei einem Ausfall der Versorgungspumpe wirkt die vom Handrad angetriebene Verdrängereinheit der Lenkeinrichtung als Pumpe und versorgt den Lenkzylinder mit einem ausreichenden Ölstrom.

Die Verwendung dieser Verdrängereinheit in einem Hydraulikmotor wird beispielsweise in der WO 96/05437 aufgezeigt. Auch hier ist die Verdrängereinheit stirnseitig an ein Gehäuse angeflanscht. Im Gehäuse ist eine Abtriebswelle mit Spiel gelagert, die einerseits aus dem Gehäuse herausragt und die andererseits über eine Kardanwelle mechanisch mit dem Läuferzahnrad der Verdrängereinheit verbunden ist. Die Abtriebswelle bildet zusammen mit dem Gehäuse radiale und axiale Steuerkanäle, die einen Zulaufanschluss und einen Ablaufanschluss mit den volumenveränderlichen Kammern der Verdrängereinheit verbinden.

Der von einer Versorgungspumpe bereitgestellte Druckölstrom wird über die Steuerkanäle im Gehäuse zur Verdrängereinheit geleitet, wo er das Läuferzahnrad in Drehung versetzt. Diese Drehbewegung wird mechanisch auf die Abtriebswelle übertragen.

Hergestellt werden diese Verdrängereinheiten, in dem zunächst die Anzahl der Zähne, der Teilkreise der Zähne und der Radius der Zähne bestimmt werden. Nach diesen Parametern wird zunächst der Außenring mit seiner relativ einfachen Innenkontur gefertigt, wobei die Innenkontur geräumt und anschließend feingeschliffen wird. Danach wird auf der Grundlage der gleichen Parameter und unter Zuhilfenahme einer komplizierten Koordinatenmittelpunktsgleichung die auf die Innenkontur des Außenringes passende Außenkontur für das Läuferzahnrad berechnet und in einem aufwendigen Arbeitsverfahren hergestellt. Dabei besteht das Bestreben, die Außenkontur des umlaufenden Läuferzahnrades so auf die Innenkontur des feststehenden Außenringes abzustimmen, dass einerseits zur Erhöhung der inneren Dichtheit ein kleinstmögliches Spiel zwischen beiden Konturen und anderseits ein leichtgängiger Bewegungsablauf des Läuferzahnrades gewährleistet ist. Das verlangt wegen der komplizierten Errechnung und Fertigung der Außenkontur des Läuferzahnrades einen hohen Aufwand. Um das Spiel zwischen den beiden Konturen des Außenringes und des Läuferzahnrades gering zu halten, werden oftmals die gefertigten Außenringe und Läuferzahnräder ausgemessen und zueinander gepaart. Das erfordert einen zusätzlichen Aufwand. Es hat sich aber gezeigt, dass trotzdem hohe innere Leckölverluste auftreten. Diese Leckverluste treten an den Dichtstellen zwischen den unmittelbar benachbarten Saugkammern und Druckkammern auf und beeinträchtigen den volumetrischen Wirkungsgrad der Verdrängereinheit insbesondere bei höheren Druckdifferenzen zwischen den Saug- und Druckkammern in einem erheblichen Maße.
Diese Leckverluste machen sich aber auch in der Funktion der Lenkeinrichtung und des Hydraulikmotors bemerkbar. So kann zum Beispiel ein Hydraulkmotor ein schlechtes Anlaufverhalten sowie eine Ungleichförmigkeit bei kleinen Drehzahlen und eine Lenkeinrichtung einen schlechten Wirkungsgrad im Notlenkbetrieb, besonders beim Funktionsbetrieb mit Kammerabschaltung, wo zusätzliche Lenkstellen entstehen, aufweisen.

Der Erfindung liegt daher die Aufgabe zu Grunde, das funktionsbedingte Spiel zwischen der Innenkontur des Außenringes und der Außenkontur des Läuferzahnrades einer gattungsgemäßen Verdrängereinheit ohne Einschränkung der Lauffreiheit zu verkleinern und dazu ein einfaches Herstellungsverfahren vorzuschlagen.
Diese Aufgabe wird durch die kennzeichnenden Merkmale des Anspruches 1 gelöst.
Das neue Verfahren beseitigt die genannten Nachteile des Standes der Technik. So wird das Dichtverhalten zwischen benachbarten und unterschiedliche Drücke aufweisende volumenveränderliche Kammern stärker gegeneinander abgedichtet. Das ist darauf zurückzuführen, dass der Dichtspalt zwischen beiden Konturen von Außenring und Läuferzahnrad stark verkleinert wird. Das führt zu geringeren Leckverlusten. Eine weitere Verringerung der Leckverluste wird dadurch erzielt, dass durch die Vergrößerung des Radius der Zähne des Außenringes die Innenkontur des Außenringes und die Außenkontur des Läuferzahnrades in ihrem Verlauf weiter angenähert werden und damit eine größere Dichtfläche ausbilden. Diese vergrößerte Dichtfläche zeigt gegenüber der bisherigen Dichtkante ein verbessertes Dichtverhalten.
Der besondere Vorteil des neuen Verfahrens liegt nun darin, dass diese Vorteile mit einem vereinfachten Verfahren erzielt werden.

Die Erfindung soll anhand eines Ausführungsbeispieles für eine Lenkeinrichtung näher erläutert werden.
Dazu zeigen:
- Fig. 1:: eine Schnittdarstellung der Lenkeinrichtung und
- Fig. 2:: eine Seitenansicht einer Verdrängereinheit für die Lenkeinrichtung.

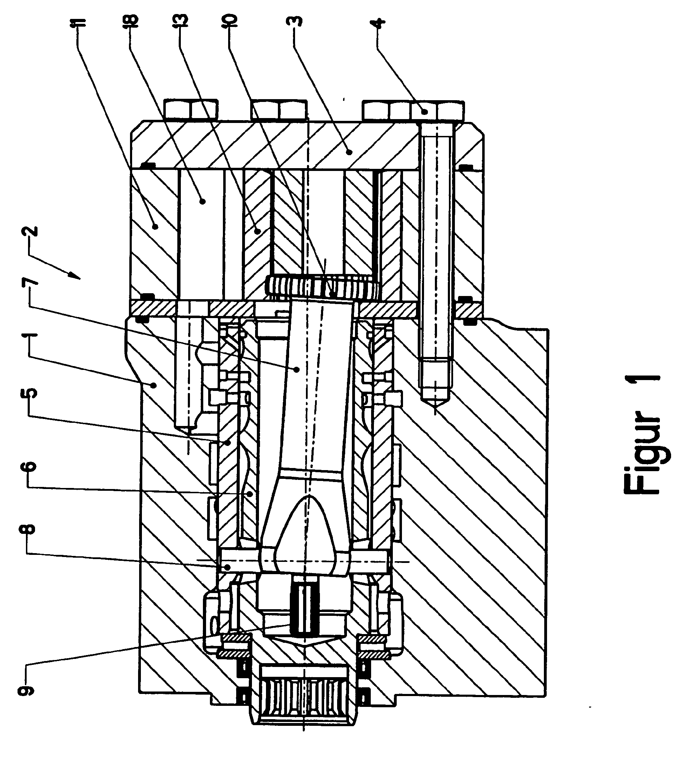

Nach der Fig. 1 besteht die hydraulische Lenkeinrichtung in der Hauptsache aus einem Gehäuse 1 mit einem Drehschiebersteuerventil und einer nach dem Gerotorprinzip arbeitenden Verdrängereinheit 2, die stirnseitig mit Hilfe eines Deckels 3 und sieben Befestigungsschrauben 4 an das Gehäuse 1 angeflanscht ist. Das Drehschiebersteuerventil besteht aus einer äußeren, im Gehäuse 1 mit Spiel eingepassten Steuerhülse 5 und einem inneren, in der Steuerhülse 5 laufenden Steuerkolben 6. Der innenliegende Steuerkolben 6 des Drehschiebersteuerventils hat einerseits eine drehfeste Verbindung mit einem nicht dargestellten Handrad. Innerhalb des Steuerkolbens 6 befmdet sich eine Kardanwelle 7, die einerseits über einen, den Steuerkolben 6 durchdringenden Stift 8 mit der äußeren Steuerhülse 5 verbunden ist. Dieser Stift 8 begrenzt im Zusammenspiel mit einer vergrößerten Bohrung im inneren Steuerkolben 6 den Verdrehwinkel zwischen der Steuerhülse 5 und dem Steuerkolben 6. Die Steuerhülse 5 und der Steuerkolben 6 stützen sich gegenseitig innerhalb des begrenzten Verdrehwinkels durch ein radial angeordnetes Federelement 9 ab. Die Kardanwelle 7 weist andererseits ein balliges Zahnnabenprofil 10 für eine mechanische Verbindung mit der Verdrängereinheit 2 auf.

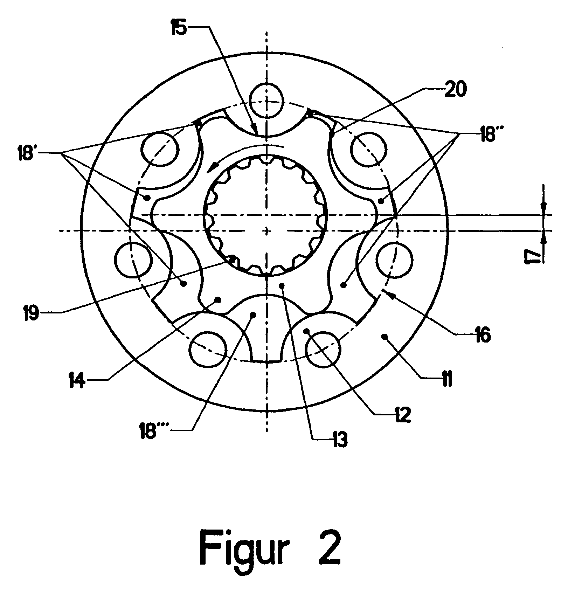

Diese Verdrängereinheit 2 besteht, wie auch die Fig. 2 zeigt, aus einem Außenring 11 mit inneren Zähnen 12 und einem innen liegenden Läuferzahnrad 13 mit äußeren Zähnen 14. Dabei ist jeder Zahn 12 des Außenrings 11 als Teil eines Zylinders mit einem Radius 15 ausgeformt und jeder Zahn 12 liegt mit seinem Mittelpunkt auf einem gemeinsamen Teilkreis 16. Der Außenring 11 ist mit einem Zahn 12 mehr ausgestattet als das Läuferzahnrad 13 Zähne 14 hat. Im vorliegenden Ausführungsbeispiel weist der Außenring 11 sieben Zähne 12 und das Läuferzahnrad 13 sechs Zähne 14 auf. Durch die unterschiedliche Zahl der Zähne 12, 14 ergeben sich zwischen dem Drehmittelpunkt des Außenringes 11 und dem Drehmittelpunkt des Läuferzahnrades 13 eine vorbestimmte Exzentrizität 17 und damit zwischen den Zähnen 12 des Außenringes 11 und den Zähnen 14 des Läuferzahnrades 13 sieben volumenveränderliche Kammern 18.

Das Drehschiebersteuerventil im Gehäuse 1 ist nun sowohl mechanisch als auch hydraulisch mit der Verdrängereinheit 2 verbunden.
Für die mechanische Verbindung besitzt das Läuferzahnrad 13 ein inneres Zahnnabenprofil 19, in welches das Zahnnabenprofil 10 der Kardanwelle 7 aus dem Drehschiebersteuerventil eingreift.
Für die hydraulische Verbindung sind das Gehäuse 1 sowie die Steuerhülse 5 und der Steuerkolben 6 des Drehschiebersteuerventils mit radialen und axialen Kanälen ausgestattet, welche die volumenveränderlichen Kammern 18 der Verdrängereinheit 2 mit einer hydraulischen Versorgungseinrichtung einerseits und mit einem hydraulischen Verbraucher andererseits verbinden. Dabei unterteilen sich die sieben volumenveränderlichen Kammern 18 der Verdrängereinheit 2 in drei nebeneinanderliegende und größer werdende Saugkammern 18' und drei ebenfalls nebeneinanderliegende und kleiner werdende Druckkammern 18". Zwischen den drei Saugkammern 18' und den drei Druckkammern 18" liegt eine druckneutrale Kammer 18"'. Jede der volumenveränderlichen Kammern 18', 18", 18'" ist von der benachbarten volumenveränderlichen Kammer 18', 18", 18'" durch eine Dichtfläche 20 voneinander getrennt, die sich aus den aufeinander abrollenden Konturen des feststehenden Außenringes 11 und des umlaufenden Läuferzahnrades 13 ergibt und die immer dann von großer Bedeutung ist, wenn die benachbarten volumenveränderlichen Kammern 18', 18", 18'" unterschiedliche Drücke aufweisen.

Die Verdrängereinheit 2 wird wie folgt hergestellt.
Zunächst wird eine Sollkontur für die Innenkontur des Außenringes 11 bestimmt, in dem die Anzahl der Zähne 12, der Radius 15 aller Zähne 12 und der Durchmesser des gemeinsamen Teilkreises 16 aller Zähne 12 vorgegeben werden.
Nach diesen Angaben wird die Außenkontur des Läuferzahnrades 13 mit Hilfe einer bekannten Koordinatenmittelpunktgleichung der Sollkontur des Außenringes 11 berechnet und anschließend in herkömmlicher Weise hergestellt, wobei der letzte Arbeitsgang das Feinschleifen ist.

Zur Herstellung der Innenkontur des Außenringes 11 wird ein Radius 15 aller Zähne 12 verwendet, der vom Radius für die Berechnung der Außenkontur des Läuferzahnrades 13 abweicht und der um ein vorbestimmtes Maß größer gewählt ist. Dieses vergrößerte Maß liegt innerhalb des errechneten Spiels zwischen der Sollkontur des Außenrings 11 und der hergestellten Außenkontur des Läuferzahnrades 13 und erlaubt gerade noch eine problemfreie Montage von Außenring und Läuferzahnrad. Idealerweise wird der Radius 15 bis zur Spielfreiheit zwischen beiden Konturen vergrößert. Mit der Vergrößerung des Radius 15 wird die der Herstellung des Läuferzahnrades 13 zugrunde liegende Sollkontur des Außenringes 11 verzerrt. Diese verzerrte Innenkontur des Außenringes 11 wird dann wieder in herkömmlicher Weise hergestellt, wobei der letzte Arbeitsgang wieder ein Feinschleifen ist.
Abschließend wird das Läuferzahnrad 13 in den Außenring 11 montiert und beide Teile werden zum Beispiel durch Läppen bis zur Leichtgängigkeit zueinander eingelaufen und damit beide Konturen einander angeglichen.

### Liste der Bezugszeichen

- 1: Gehäuse
- 2: Verdrängereinheit
- 3: Deckel
- 4: Befestigungsschraube
- 5: Steuerhülse
- 6: Steuerkolben
- 7: Kardanwelle
- 8: Stift
- 9: Federelement
- 10: Zahnnabenprofil der Kardanwelle
- 11: Außenring
- 12: Zahn des Außenrings
- 13: Läuferzahnrad
- 14: Zahn des Läuferzahnrades
- 15: Radius
- 16: Teilkreis
- 17: Exzentrizität
- 18: volumenveränderliche Kammer
- 19: Zahnnabenprofil des Läuferzahnrades
- 20: Dichtfläche

## Patentansprüche

1. Verfahren zur Herstellung einer nach dem Gerotorprinzip arbeitenden Verdrängereinheit für hydraulische Lenkeinrichtungen und für Hydraulikmotoren, bei dem die Innenkontur des Außenringes (11) direkt nach der Anzahl der Zähne (12), dem Radius (15) der Zähne (12) und dem Durchmesser des gemeinsamen Teilkreises (16) der Zähne (12) gefertigt wird und die Außenkontur des Läuferzahnrades (13) aus denselben Parametern zunächst errechnet und dann im Wälzverfahren hergestellt wird, **dadurch gekennzeichnet, dass** der Radius (15) der Zähne (12) zur Herstellung der Innenkontur des Außenringes (11) um ein vorbestimmtes, die Montage des Außenringes (11) und des Läuferzahnrades (13) ermöglichendes Maß größer als der Radius (15) der Zähne (12) für die Berechnung der Außenkontur des Läuferzahnrades (13) gewählt wird.

2. Verfahren nach Anspruch 1,
**dadurch gekennzeichnet, dass** die Innenkontur des Außenrings (11) und die Außenkontur des Läuferzahnrades (13) zueinander eingelaufen werden.

## Claims

1. Method for producing a displacement unit which operates according to the gerotor principle for hydraulic steering devices and for hydraulic motors, in which the inner contour of the outer ring (11) is produced directly according to the number of teeth (12), the radius (15) of the teeth (12) and the diameter of the common reference circle (16) of the teeth (12), and the outer contour of the rotor gear wheel (13) is firstly calculated on the basis of the same parameters and then produced in a generating method, **characterised in that**, in order to produce the inner contour of the outer ring (11), the radius (15) of the teeth (12) is selected so as to be greater by a predetermined measure, which enables the outer ring (11) and the rotor gear wheel (13) to be assembled, than the radius (15) of the teeth (12) for calculating the outer contour of the rotor gear wheel (13).

2. Method according to Claim 1,
**characterised in that** the inner contour of the outer ring (11) and the outer contour of the rotor gear wheel (13) are run into one another.

## Revendications

1. Procédé de fabrication d'une unité de refoulement fonctionnant selon le principe Gerotor pour des dispositifs de direction hydrauliques et pour des moteurs hydrauliques, selon lequel le contour intérieur de la bague extérieure (11) est fabriqué directement selon le nombre de dents (12), le rayon (15) des dents (12) et le diamètre du segment de cercle total (16) des dents (12), le contour extérieur de la roue dentée du rotor (13) étant tout d'abord calculé à partir des mêmes paramètres puis fabriqué dans le cadre d'un procédé de laminage,
**caractérisé en ce que**
le rayon (15) des dents (12), sélectionné pour la fabrication du contour intérieur de la bague extérieure (11), a une valeur prédéterminée, permettant le montage de la bague extérieure (11) et de la roue dentée de rotor (13), supérieure au rayon (15) des dents (12) pour le calcul du contour extérieur de la roue dentée du rotor (13).

2. Procédé selon la revendication 1,
**caractérisé en ce que**
le contour intérieur de la bague extérieure (11) et le contour extérieur de la roue dentée du rotor (13) sont adaptés l'un à l'autre.
